# FASCICULE DE BREVET EUROPEEN

(11) **EP 4 370 376 B1**
(45) Date de publication et mention de la délivrance du brevet: **18.02.2026**
(21) Numéro de dépôt: 22741299.6
(22) Date de dépôt: 11.07.2022
(51) Int. Cl.: B60Q 1/24, B60Q 1/32, F21S 41/43, F21S 41/143, F21S 41/25, F21S 41/275, F21S 41/265, F21S 41/20, F21S 43/20

(54) **MODULE LUMINEUX COMPRENANT UN ÉLÉMENT À TAUX DE TRANSMISSION DE LUMIÈRE VARIABLE**
LEUCHTMODUL, DAS EIN ELEMENT MIT VARIABLER LICHTÜBERTRAGUNGSRATE UMFASST
LIGHT MODULE COMPRISING AN ELEMENT WITH VARIABLE LIGHT TRANSMISSION RATE

(30) Priorité: 12.07.2021 FR 2107568
(43) Date de publication de la demande: 22.05.2024
(73) Titulaire: Valeo Vision, 93012 Bobigny Cedex (FR)
(72) Inventeur: SACCHET, Dirkie, 7822 MESLIN L'EVEQUE (BE); DINANT, Franck, 7822 MESLIN L'EVEQUE (BE); MUDRY, Emeric, 7822 MESLIN L'EVEQUE (BE); DEBERT, Florestan, 7822 MESLIN L'EVEQUE (BE)
(74) Mandataire: Valeo Visibility
(86) Numéro de dépôt international: PCT/EP2022/069332
(87) Numéro de publication internationale: WO 2023/285388

(56) Documents cités:
- EP-A1- 1 564 482
- EP-A1- 3 279 135
- EP-A2- 0 149 570
- FR-A1- 3 062 613
- KR-A- 20130 101 734
- US-A1- 2021 123 578

## Description

La présente invention se rapporte au domaine des dispositifs d'éclairage de véhicule automobile. Particulièrement, l'invention concerne un module lumineux destiné à assurer des fonctions auxiliaires. Plus particulièrement, l'invention concerne un module lumineux projetant un champ d'éclairage sur le sol à proximité du véhicule, notamment à côté des portières.

Afin d'améliorer le confort d'utilisation du véhicule, les modules lumineux avec éclairage vers le sol sont installés dans les rétroviseurs ou sur le flanc latéral du véhicule, en dessous du seuil des portes. Ces modules lumineux sont agencés pour projeter de la lumière au sol qui éclaire la zone à côté des portières. De manière générale, la zone éclairée, constituant un champ d'éclairage, s'étend longitudinalement selon l'axe principal du véhicule. Un module lumineux de véhicule automobile est connu du document EP 3279135 A.

Ces modules lumineux peuvent être allumés avant que les passagers et le conducteur entrent dans le véhicule, et/ou avant qu'ils s'apprêtent à sortir du véhicule. De cette manière, les passagers et le conducteur voient mieux l'état du sol et voient si le sol présente des reliefs qui risquent de les faire trébucher. Les modules lumineux décrits permettent donc d'accroître la sécurité des utilisateurs.

Par ailleurs, les modules lumineux peuvent comprendre des éléments supplémentaires permettant de projeter un motif au sol. Ce motif est compris dans le champ d'éclairage ou constitue lui-même le champ d'éclairage. Le motif projeté peut être un insigne de la marque du véhicule, un sigle ou une image esthétique. L'élément projeté au sol présente une information, par exemple les informations relatives à la météo.

Les modules lumineux décrits peuvent être connectés avec un dispositif de pilotage. Ainsi, les modules lumineux sont allumés dès que l'utilisateur démarre le véhicule à distance et restent allumés jusqu'à ce que l'utilisateur rentre dans le véhicule. Ces dispositifs lumineux peuvent donc être utilisés pour établir un « scénario d'accueil », ou « welcome scenario » en anglais, ce qui permet de satisfaire davantage l'utilisateur du véhicule.

Cependant, ces modules lumineux présentent l'inconvénient de former un champ d'éclairage dont l'intensité lumineuse n'est pas partout homogène.

En effet, les modules lumineux décrits sont souvent installés pour projeter le faisceau lumineux selon un axe incliné par rapport à l'horizontale vers le bas afin que le champ d'éclairage puisse s'étendre longitudinalement vers l'arrière du véhicule. Une telle projection engendre une diminution de l'intensité lumineuse du champ d'éclairage au fur et à mesure que nous éloignons de la source de lumière.

Ce défaut est accentué lorsque le module lumineux est placé à un bas niveau, par exemple en dessous des portières du véhicule. Dans ce cas, l'axe de projection est davantage incliné et l'angle de projection est davantage diminué. La projection du faisceau lumineux devient ainsi rasante. Par conséquent, le champ d'éclairage au sol a son intensité diminue graduellement dans la direction d'éloignement du module lumineux. En d'autres termes, le champ d'éclairage est divisé en plusieurs secteurs d'intensité lumineuse différente. Les secteurs proches du module lumineux sont plus intenses que les secteurs éloignés du dispositif.

Plus l'angle de projection est faible, plus la projection devient rasante, plus la proportion des secteurs sombres, ou de faible d'intensité lumineuse, augmente.

Par ailleurs, la différence de luminosité du champ d'éclairage est encore plus perceptible lorsque le champ d'éclairage est formé par un motif.

Au vu de ce problème, un objectif de l'invention est de concevoir un module lumineux apte à projeter au sol un champ d'éclairage présentant une intensité lumineuse uniforme.

Avec cet objectif en vue, un module lumineux selon l'invention comprend :
- une source de lumière ;
- une optique de projection conçue pour projeter un champ d'éclairage au sol.

Selon l'invention, le module lumineux comprend en outre un élément à taux de transmission de lumière variable disposée entre la source de lumière et l'optique de projection, ledit élément à taux de transmission de lumière variable comprenant :
- une première portion recevant des rayons lumineux destinés à constituer un premier secteur du champ d'éclairage ;
- une deuxième portion recevant des rayons lumineux destinés à constituer un deuxième secteur du champ d'éclairage situé plus loin de la source de lumière que le premier secteur.

De plus, la première portion présente un taux de transmission de lumière, dit premier taux de transmission de lumière, inférieur au taux de transmission de lumière de la deuxième portion, dit deuxième taux de transmission de lumière.

Par ailleurs, le premier taux de transmission de lumière et le deuxième taux de transmission de lumière sont définis de manière à ce que l'intensité lumineuse du premier secteur soit sensiblement égale à l'intensité lumineuse du deuxième secteur.

En d'autres termes, le taux de transmission de lumière varie au sein de l'élément proposé, d'où son nom l'élément à taux de transmission de lumière variable. Précisément, la première portion de l'élément à taux de transmission de lumière variable est plus opaque que la deuxième portion du même élément. La première portion laisse moins passer la lumière que la deuxième portion. De plus, le degré d'opacité de la première portion et de la deuxième portion sont définis de façon que le premier secteur ait son intensité lumineuse diminuée pour arriver à la même intensité lumineuse du deuxième secteur.

Ainsi, en intégrant le module lumineux proposé dans un dispositif lumineux décrit précédemment, nous parvenons donc à homogénéiser l'intensité lumineuse de deux secteurs différents du champ d'éclairage, en dépit de leur position différente par rapport à la source de lumière.

Le champ d'éclairage ainsi obtenu présente la même intensité lumineuse dans toute son étendue, ce qui améliore la qualité du champ d'éclairage et satisfait l'observateur, notamment l'utilisateur du véhicule dans lequel est installé le module lumineux.

Dans le présent document, l'optique de projection crée une image réelle, et éventuellement anamorphosée, d'une partie du module, par exemple la source elle-même, ou d'une image intermédiaire de la source, à distance (finie ou infinie) très grande devant les dimensions du module (d'un rapport de l'ordre d'au moins 30, de préférence 100). Cette optique de projection peut consister en un ou plusieurs réflecteurs, ou bien en une ou plusieurs lentilles, ou un ou plusieurs guides de lumière ou encore en une combinaison de ces possibilités.

La source de lumière peut être une source de lumière à l'état solide. Le terme "état solide" fait référence à la lumière émise par l'électroluminescence à l'état solide, qui utilise des semi-conducteurs pour convertir l'électricité en lumière. Par rapport à l'éclairage à incandescence, l'éclairage à semi-conducteurs crée de la lumière visible avec une production de chaleur et une dissipation d'énergie réduite. La masse généralement faible d'un dispositif d'éclairage électronique à semi-conducteurs offre une plus grande résistance aux chocs et aux vibrations que les tubes/ampoules en verre cassant et les fils de filaments longs et fins. Ils éliminent également l'évaporation du filament, ce qui peut augmenter la durée de vie du dispositif d'éclairage. Quelques exemples de ces types d'éclairage comprennent les diodes électroluminescentes (LED) à semi-conducteurs, les diodes électroluminescentes organiques (OLED) ou les diodes électroluminescentes à polymère (PLED) comme sources d'éclairage plutôt que les filaments électriques, le plasma ou le gaz.

Selon l'invention, le module lumineux comprend une diapositive placée entre la source de lumière et l'optique de projection et portant un motif à projeter, et l'élément à taux de transmission de lumière variable est disposé sur la diapositive.

Le module lumineux selon l'invention peut optionnellement présenter une ou plusieurs des caractéristiques suivantes :
- la diapositive comporte une première face orientée vers l'optique de projection et une deuxième face orientée vers la source de lumière, ladite première face étant placée dans un plan focal de l'optique de projection et comprenant le motif à projeter dont la projection est comprise dans le champ d'éclairage; ainsi, la netteté de la projection du motif portant par la diapositive est améliorée ; à titre d'exemple, le motif peut être un insigne, un sigle, une image d'objet; le motif peut être réalisé par un procédé de photolithographie ou par gravure par laser ; dans ce cas, le champ d'éclairage est constitué d'éléments distingués des uns des autres grâce au contraste différentes entre ces éléments ;
- selon un exemple de réalisation, la diapositive est conçue de façon que la projection du motif forme le champ d'éclairage ;
- selon un exemple, la diapositive comprend un support transparent laissant traverser la totalité des rayons lumineux qui l'atteignent sans pour autant dévier leur trajectoire ;
- l'élément à taux de transmission de lumière variable est disposé sur la première face de la diapositive ; ainsi, l'élément à taux de transmission de lumière variable et le motif sont disposés sur la même face de la diapositive ; une telle diapositive est rapide et peu coûteuse à fabriquer, car le traitement surfacique est concentré sur une seule face ;
- l'élément à taux de transmission de lumière variable est disposé sur la deuxième face de la diapositive ; en d'autres termes, l'élément à taux de transmission de lumière variable et le motif sont disposés sur deux faces différentes de la diapositive ; de cette manière, la qualité du champ d'éclairage est davantage améliorée ; en effet, l'élément à taux de transmission de lumière variable n'étant pas placée dans le plan focal de l'optique de projection, les composants faisant partie de cet élément apparaissent estompés, voire n'apparaissent pas du tout, sur le champ d'éclairage ; la qualité de l'image projetée au sol est garantie car seule la projection du motif est nettement visible;
- selon un exemple, le champ d'éclairage est constitué par l'image projetée de la source de lumière ; dans ce cas, le module lumineux est utilisé pour générer un spot lumineux, uniforme permettant d'éclairer les alentours du véhicule ;
- l'élément à taux de transmission de lumière variable présente une épaisseur variable ; à titre d'exemple, cet élément est formé par une couche métallique, notamment composée de chrome ; le taux de transmission de lumière est inversement proportionnel à l'épaisseur ; plus l'épaisseur est importante, moins l'est le taux de transmission ;
- l'élément à taux de transmission de lumière variable est formé par une couche comprenant une pluralité d'unités élémentaires, dite couche à taux de transmission de lumière variable, les unités d'élémentaires étant distribuées de manière à ce que la première portion présente une densité d'unités élémentaires plus élevée que la densité d'unités élémentaires de la deuxième portion ; en d'autres termes, ladite couche est organisée en portions de densité d'unités élémentaires différente ; ainsi, on s'est inspiré la technique de tramage, ou « dithering » en anglais, dans le domaine de l'impression, pour créer des portions plus ou moins opaques laissant traverser une partie des rayons lumineux de façon à diminuer l'intensité lumineuse du secteur souhaité, notamment, du secteur qui est situé proche de la source de lumière ;
- dans un exemple de réalisation, la couche à taux de transmission de lumière variable comprend une densité d'unités élémentaires qui varie progressivement au sein de chaque portion ; cette variation progressive continue lorsque l'on passe d'une portion à l'autre ; en d'autres termes, la couche à taux de transmission de lumière variable comprend une densité d'unités élémentaires qui varie progressivement dans son ensemble ; à titre d'exemple, la couche à taux de transmission de lumière variable présente une variation graduelle de la densité des unités élémentaires dans une direction donnée (horizontale, verticale, diagonale) et dans un sens donné (de haut en bas ou vice versa, de droite à gauche ou vice versa);
- à titre d'exemple, dans chaque portion, les unités élémentaires sont distribuées de manière régulière ; les unités élémentaires sont espacées des unes des autres d'une même distance ;
- les unités élémentaires sont complètement opaques ;
- les unités élémentaires sont en métal ; par exemple, elles peuvent être en chrome, ou en aluminium ;
- la taille de chaque unité élémentaire est de l'ordre de quelques micromètres, par exemple aux alentours de trois micromètres ;
- les unités élémentaires sont identiques ; il s'agit d'une configuration simple et pratique à réaliser ;
- la couche à taux de transmission de lumière variable est obtenu par un procédé de photolithographie ; il s'agit d'une méthode de fabrication précise, et flexible qui peut s'adapter à différentes manières de répartition des unités élémentaires ;
- l'élément à taux de transmission de lumière variable comprend en outre une troisième portion transparente, ladite troisième portion recevant des rayons lumineux destinés à constituer un troisième secteur du champ éclairage qui est situé le plus éloigné de la source de lumière ; lorsque l'élément à taux de transmission de lumière variable est composé d'une couche pourvue d'unités élémentaires, la troisième portion est dépourvue d'unités élémentaires ;
- selon un exemple, la deuxième portion est disposée entre la première portion et la troisième portion ; ainsi, l'opacité diminue de la première portion à la troisième portion ; en conséquence, l'intensité lumineuse du premier secteur diminue de sorte à atteindre l'intensité du troisième secteur qui est situé le plus éloigné de la source ;
- le module lumineux est agencé de manière à ce que l'axe de projection du faisceau lumineux issu dudit module soit incliné par rapport l'horizontale, vers le bas ; ainsi, le croisement entre le faisceau lumineux et le sol formant le champ d'éclairage ; ici, on entend par l'horizontale un axe parallèle à la surface du sol sur lequel repose le véhicule ;
- l'optique de projection comprend une pluralité de lentilles, les lentilles étant empilées les unes sur les autres, par exemple, de manière à former un bloc unitaire.

Un autre objet de l'invention concerne un dispositif lumineux de véhicule automobile comprenant un module lumineux selon l'invention.

De manière optionnelle, le dispositif lumineux est installé en dessous d'une portière du véhicule, notamment la portière avant.

Dans un autre exemple, le dispositif lumineux est installé dans un rétroviseur du véhicule.

D'autres caractéristiques et avantages innovants ressortiront de la description ci-après, fournie à titre indicatif et nullement limitatif, en référence aux dessins annexés, dans lesquels :
[Fig.1] représente une vue de côté d'un véhicule automobile comprenant un module lumineux selon un exemple de réalisation de l'invention ;
[Fig.2] représente une vue en coupe du module lumineux de la [Fig.1] ;
[Fig.3] représente une vue schématique et en perspective d'une première face de la diapositive faisant partie du module lumineux de la [Fig.1] ;
[Fig.4] représente une vue schématique et en perspective d'une deuxième face de la diapositive faisant partie du module lumineux de la [Fig.1] ;
[Fig.5] représente une vue arrière de la diapositive de la [Fig.3], accompagnée par des vues détaillées A, B et C ; et
[Fig.6] représente une vue en coupe transversale de la diapositive selon un plan passant par la ligne VI-VI illustrée sur la [Fig.3] et sur la [Fig.4].

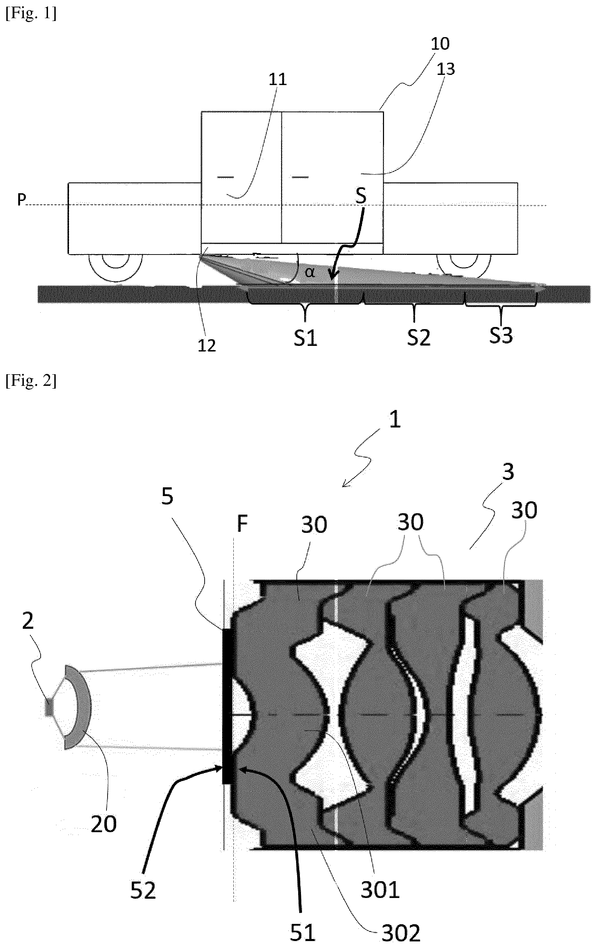

En référence à ces figures, notamment à la [Fig.1], un véhicule automobile 10 comprend, sur le côté gauche illustré, une porte avant 11 et une porte arrière 13. Un dispositif lumineux comportant un module lumineux 1 (pas visible sur la [Fig.1]) est installé dans un seuil de porte 12 situé sous les portes avant 11 et arrière 13. Dans l'exemple illustré, le dispositif lumineux est situé à l'extrémité avant du seuil de porte 12 et est agencé pour projeter au sol un champ d'éclairage S qui s'étend parallèlement à l'axe principal P du véhicule 10. L'axe de projection forme un angle α avec un axe horizontal.

Le dispositif lumineux sert de moyen d'éclairage latéral de l'espace situé à côté des portes d'entrée avant et arrière.

Ici, le champ d'éclairage S s'étend jusqu'à l'arrière du véhicule 10. Dans l'état de la technique, le champ d'éclairage présente une intensité lumineuse variable, ce qui rend visible parfois la différence d'intensité lumineuse entre les différents secteurs de ce champ d'éclairage, c'est-à-dire que les secteurs plus sombres que d'autres peuvent être distingués.

Etant donné que le dispositif lumineux comprend le module lumineux 1 réalisé selon le principe de l'invention, le champ d'éclairage S présente une intensité lumineuse homogène dans toute son étendue. Autrement dit, le champ d'éclairage S n'est pas divisée en plusieurs secteurs à différente intensité lumineuse, mais il est constitué ici d'un seul secteur avec la même intensité lumineuse partout.

La qualité du champ d'éclairage est ainsi améliorée. Pour y parvenir, le dispositif lumineux comporte le module lumineux 1 tel qu'illustré schématiquement sur les figures 2 à 6.

Sur la [Fig.2], le module lumineux 1 comprend une source de lumière 2, une optique de projection 3 et une diapositive 5 disposée entre la source de lumière 2 et l'optique de projection 3.

La source de lumière 2 est ici une diode à électroluminescence (DEL ou LED, de l'anglais : light-emitting diode). D'autres types de sources de lumière sont envisageables. La source de lumière 2 peut comprendre une ou plusieurs diodes à électroluminescence. Ici, un collimateur 20 est placé devant la source de lumière 2 afin de produire un faisceau résultant de rayons parallèles dirigeant dans la direction de la diapositive 5 et de l'optique de projection 3.

Dans l'exemple illustré, l'optique de projection 3 présente un plan foyer F et elle est composée d'une pluralité de lentilles 30 qui sont empilées les unes sur les autres. Les lentilles sont ici au nombre de quatre.

Chacune des lentilles 30 comprend une partie centrale 301 avec des surfaces dioptriques et un anneau externe 302 entourant la partie centrale 301. Les surfaces dioptriques sont paramétrées pour projeter les rayons issus de la source de lumière 2 tout en limitant, voire supprimant, des aberrations optiques, telles que la distorsion.

L'anneau externe 302 est pourvu des moyens d'engagement destinés à coopérer avec des moyens d'engagement complémentaire de l'anneau externe de la lentille adjacente. A titre d'exemple, des moyens d'engagement peuvent comprendre une rainure ou une nervure.

Afin de garantir un bon maintien de l'ensemble des lentilles 30, celles-ci sont mises dans un porte-lentille (non illustré sur la [Fig.2]) qui serre les deux extrémités opposées de l'ensemble. Pour ce faire, le porte-lentille comprend des bords qui prennent appui sur l'anneau externe de la première lentille et de la dernière lentille de l'ensemble.

La diapositive 5 est ici une plaque transparente 53 ayant, à titre illustratif, une section rectangulaire. La diapositive 5 peut être réalisée en verre ou en plastique, par exemple en polytéréphtalate d'éthylène (PET). La diapositive 3 présente une première face 51 et une deuxième face 52. La diapositive est placée dans le module lumineux 1 de façon que la première face 51 soit orientée vers l'optique de projection 3 et que la deuxième face 52 soit orientée vers la source de lumière 2. La première face 51 est encore appelée la face avale et la deuxième face 52 la face amont. Les termes « amont » et « aval » sont définis selon le sens de propagation de lumière dans le module lumineux 1.

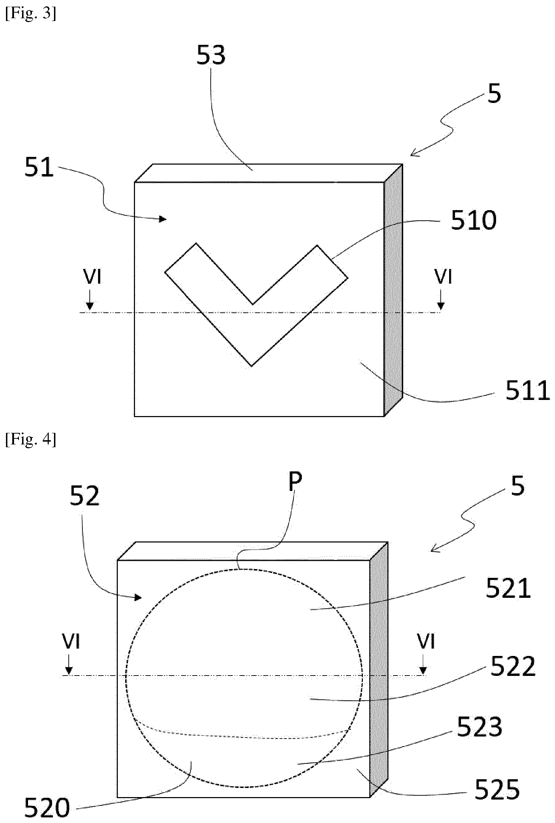

Comme illustré sur la [Fig.3], un motif 510 est réalisé sur la première face 51 de la diapositive 5. Le motif 510 sera projeté au sol et forme ainsi le champ d'éclairage S. Dans cet exemple, le motif 510 est la lettre « V ».

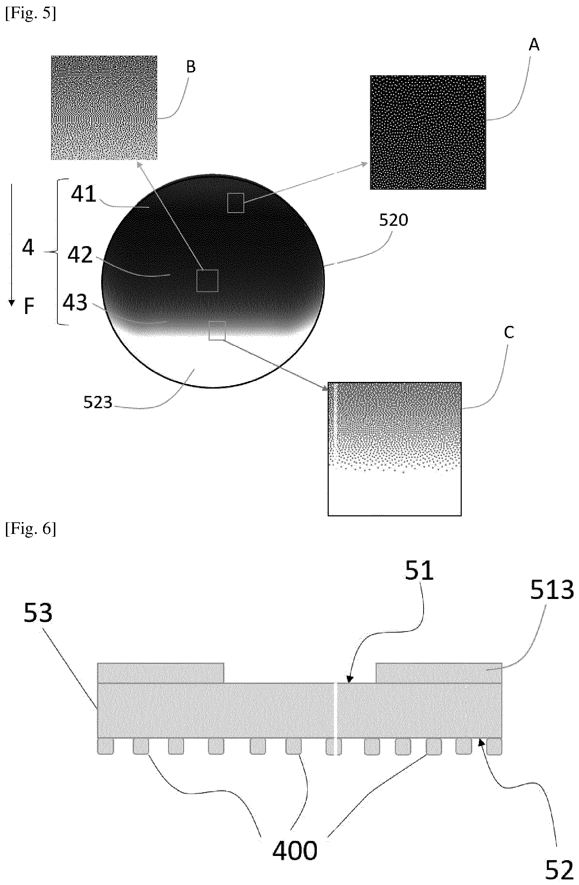

Le motif 510 est obtenu par un procédé de traitement surfacique de la première face 51. Il s'agit par exemple d'un procédé de photolithographie qui créer une zone transparente 510 et une zone opaque 511 sur la première face 51. La zone opaque 511 est couverte d'une couche opaque 513 (visible sur la [Fig.6]) ne laissant pas traverser la lumière, notamment d'une couche oxyde de chrome. La couche opaque 513 peut être réalisée à partir d'autres matériaux, tels que l'aluminium ou l'argent. Dans la zone transparente 510, la première face 51 reste à découvert, c'est-à-dire que la première face 51 n'est pas couverte par de la matière. Les rayons de lumière peuvent donc passer à travers la zone transparente 510 pour atteindre l'optique de projection 3. La zone transparente constitue donc le motif 510 à projeter. La première face 51 est placée dans le plan foyer F de l'optique de projection 3 pour que l'image du motif soit projetée à l'infini, et soit donc nette sur la surface de projection.

Dans un autre exemple, la zone transparente peut être couverte par une couche transparente laissant traverser tous les rayons de lumière qui l'atteignent.

Les figures 4 et 5 montrent la deuxième face 52 de la diapositive 5. Selon l'invention et comme dans cet exemple, un élément à taux de transmission de lumière variable 4 est disposé sur la deuxième face 52. Ici, l'élément à taux de transmission de lumière variable 4 s'étend dans une zone 520 délimitée par un cercle P illustré sur la [Fig.4]. La zone 520 est encore appelée la zone active 520, car elle est placée en vis-à-vis du motif 510 sur la première face 51. Autrement dit, la zone active 520 reçoit les rayons de lumière qui arrivent ensuite sur le motif 510.

Le reste de la deuxième face 52, n'étant pas placé au regard du motif 510, est appelé zone inactive 525. Une couche de revêtement opaque est déposée sur cette zone inactive 521 pour empêcher tout rayon parasite qui peut atteindre l'optique de projection 3 et qui sera ainsi imagé dans le champ d'éclairage S. Cette couche de revêtement opaque peut être de la même nature que la couche opaque 513 déposée sur la première face 51.

L'élément à taux de transmission de lumière variable est formé ici par une couche de matière 4 comportant une pluralité d'unités élémentaires 400 espacées les unes des autres.

La distance entre une unité élémentaire 400 avec des unités voisines peut être variée au sein de la couche de matière 4.

En effet, comme illustré sur la [Fig.5], la couche de matière 4 comprend une densité d'unités élémentaires qui diminue selon la direction du haut vers le bas de la [Fig.5], représentée par la flèche F. Par exemple, la densité d'unités élémentaires décroît de façon continue du haut vers le bas. Cette décroissance peut être linéaire ou non linéaire. Décrit autrement, la couche de matière 4 peut être divisée en une pluralité de portions qui se suivent les unes des autres dans la direction d'extension de la couche de matière, ici représentée par la flèche F. Chaque portion peut présenter une très faible dimension et peut comprendre une densité d'unités élémentaires définie. Pour une portion considérée, celle-ci présente une densité d'unités élémentaires qui est supérieure à celle de la portion qui est située immédiatement en-dessous.

Ici, la couche de matière 4 s'étend partiellement sur la zone active 520 de la deuxième face 52 de la diapositive 5. Ici, les unités élémentaires sont disposées sur une partie de la zone active 520 avec une densité décroissante du haut vers le bas dans cette partie. La partie restante de la zone active 520 est dépourvue d'unités élémentaires. Cette partie restante est encore appelée la zone non couverte par la couche de matière 4 et référencée 523 sur les figures 4 et 5.

A titre d'exemple, la distribution des unités élémentaires dans une portion supérieure 41 de la couche de matière 4 est illustrée dans la vue agrandie annotée « A » sur la [Fig.5]. La distribution des unités élémentaires dans une portion médiane 42 de la couche de matière 4 est illustrée dans la vue agrandie annotée « B » sur la [Fig.5]. Il est remarqué que la densité des unités élémentaires est plus élevée dans la zone supérieure 41 que dans la zone médiane 42. Une autre vue agrandie annotée « C » sur la [Fig.5] illustre la distribution des unités élémentaires dans une portion inférieure 43 avec une densité qui diminue au fur et à mesure jusqu'à atteindre la zone 523 non couverte par la couche de matière 4.

Dans un autre exemple de réalisation, les unités élémentaires peuvent être disposées avec une densité variable sur toute la surface de la zone active 520 de la deuxième face 52. Dans ce cas, la zone 523 sera couverte par une densité plus faible d'unités élémentaires.

Selon un autre exemple de réalisation, les unités élémentaires peuvent être distribuées dans plusieurs groupes à densité constante et la densité est différente d'un groupe à l'autre. Dans ce cas, l'agencement de ces groupes entre eux dépend de la façon dont le module lumineux est installé dans le véhicule, par exemple pour une projection non-rasante ou perpendiculaire au sol. Par ailleurs, la répartition par groupe d'unités élémentaires à densité constante peut être adaptée aux motifs avec des surfaces à luminance particulièrement contrastées.

Revenant à l'exemple illustré, il est observé sur la [Fig.6] que les unités élémentaires 400 présentent la même taille, ce qui permet à la couche de matière 4 d'avoir une épaisseur constante. De plus, la couche de matière 4 avec des unités élémentaires identiques est simple à réaliser.

Les unités élémentaires 400 sont réalisées à partir d'un matériau opaque. Ici, les unités élémentaires 400 sont en métal, par exemple, en chrome ou en aluminium. De manière optionnelle, les unités élémentaires 400 peuvent être réalisées du même matériau de la couche couvrant la zone inactive 525.

Avec leur corps opaque, chaque unité élémentaire empêche les rayons de lumière qui l'atteigne de la traverser. En complément de ce qui précède, les unités élémentaires 400 peuvent avoir une couleur sombre, voire noire.

La présence des unités élémentaires 400 sur la deuxième face 52 de la diapositive réduit la quantité de rayons de lumière qui peuvent atteindre la deuxième face 52 et traverser le corps 53 pour parvenir à la première face 51. En d'autres termes, les unités élémentaires 400 ont un impact sur la transparence de la diapositive. Plus les unités élémentaires 400 sont nombreuses, plus la partie concernée de la diapositive devient opaque. Le degré d'opacité de cette partie est lié à la densité des unités élémentaires 400 qui y sont présentes.

La couche 4 contenant les unités élémentaires 400 décrite précédemment est appelée la couche à taux de transmission de lumière variable, car elle modifie le degré d'opacité de la diapositive, et ce de manière changeante sur la deuxième face 52. En effet, la partie de la deuxième face 52 qui est couverte par la couche 4 présente une opacité qui varie de façon proportionnelle à la densité d'unités élémentaires de cette couche 4. La partie supérieure 521 de la zone active 520 est plus opaque que la partie médiane 522 de la même zone. Enfin, la zone 523 qui est dépourvue d'unités élémentaires 400 conserve sa transparence initiale.

Portant la couche à taux de transmission variable 4 telles que décrite, la diapositive 5 est agencée dans le module lumineux 1 de manière à ce que les rayons de lumière atteignant la partie supérieure 521 et la partie médiane soient les rayons destinés à former les secteurs du champ d'éclairage S qui sont proches de la source lumineuse. Ces secteurs sont référencés S1 et S2 sur la [Fig.1]. En parallèle, les rayons lumineux qui atteignent la zone 523 participent à former le secteur du champ d'éclairage qui est le plus éloigné de la source lumineuse. Ce secteur est référencé S3 sur la [Fig.1].

De cette manière, l'intensité lumineuse est la même dans tout le champ d'éclairage S, car la quantité de lumière formant les premier et deuxième secteurs S1 et S2 est réduite au même niveau que la quantité de lumière formant le troisième secteur S3. Cette réduction est originaire de la présence des unités élémentaires 400 sur les parties 521 et 522 de la deuxième face 52, ce qui empêche une partie de la lumière de traverser la diapositive 5.

La couche à taux de transmission de lumière variable permet donc de remédier à la distribution lumineuse inhomogène du champ d'éclairage dans l'état de la technique. En effet, dans l'état de la technique, le secteur qui est situé plus proche du module lumineux, donc de la source de lumière, présente une intensité lumineuse plus élevée que celle du secteur qui est situé un peu plus loin de la source. Grâce à la couche à taux de transmission de lumière variable, le premier secteur, plus éclairé, a son intensité lumineuse qui diminue pour arriver à la même intensité lumineuse du deuxième secteur, qui se situe plus éloigné de la source de lumière et qui est donc moins éclairé.

Bien entendu, la présente invention ne se limite pas à l'exemple décrit ci-dessus. Diverses modifications peuvent être apportées à l'exemple décrit sans pour autant sortir du cadre de l'invention.

Par exemple, le motif réalisé sur la première face de la diapositive peut être différent. Le nombre de portions de la couche à taux de transmission de lumière variable et donc le nombre de parties divisées sur la deuxième face peuvent être différents. D'autres matériaux et d'autres procédés pour réaliser la couche à taux de transmission de lumière variable peuvent être envisagés.

## Revendications

1. Module lumineux (1) de véhicule automobile comprenant :
- une source de lumière (2) ;
- une optique de projection (3) conçue pour projeter un champ d'éclairage (S) au sol; un élément à taux de transmission de lumière variable (4) disposée entre la source de lumière et l'optique de projection, ledit élément à taux de transmission de lumière variable comprenant :
• une première portion (41) recevant des rayons lumineux destinés à constituer un premier secteur (S1) du champ d'éclairage ;
• une deuxième portion (42) recevant des rayons lumineux destinés à constituer un deuxième secteur (S2) du champ d'éclairage, le deuxième secteur étant situé plus loin de la source de lumière que le premier secteur ; et
la première portion présentant un taux de transmission de lumière, dit premier taux de transmission de lumière, inférieur au taux de transmission de lumière de la deuxième portion, dit deuxième taux de transmission de lumière ; et
le premier taux de transmission de lumière et le deuxième taux de transmission de lumière étant définis de manière à ce que l'intensité lumineuse du premier secteur soit sensiblement égale à l'intensité lumineuse du deuxième secteur;
- une diapositive (5) placée entre la source de lumière (2) et l'optique de projection (3) et portant un motif à projeter, **caractérisé en ce que** l'élément à taux de transmission de lumière variable est disposé sur la diapositive (5).

2. Module lumineux (1) selon la revendication 1, **caractérisé en ce que** la diapositive (5) comporte une première face (51) orientée vers l'optique de projection (3) et une deuxième face (52) orientée vers la source de lumière (2), ladite première face étant placée dans un plan focal (F) de l'optique de projection (3) et comprenant le motif à projeter dont la projection est comprise dans le champ d'éclairage (S) ou forme le champ d'éclairage (S).

3. Module lumineux (1) selon la revendication 2, **caractérisé en ce que** l'élément à taux de transmission de lumière variable (4) est disposé sur la première face (51) de la diapositive (5).

4. Module lumineux (1) selon la revendication 2, **caractérisé en ce que** l'élément à taux de transmission de lumière variable (4) est disposé sur la deuxième face (52) de la diapositive (5).

5. Module lumineux (1) selon la revendication 1, **caractérisé en ce que** le champ d'éclairage est constitué par l'image projetée de la source de lumière (2).

6. Module lumineux (1) selon l'une des revendications précédentes, **caractérisé en ce que** l'élément à taux de transmission de lumière variable présente une épaisseur variable.

7. Module lumineux (1) selon l'une des revendications 1 à 4, **caractérisé en ce que** l'élément à taux de transmission de lumière variable est formé par une couche (4) comprenant une pluralité d'unités élémentaires (400), dite couche à taux de transmission de lumière variable, lesdites unités élémentaires (400) étant distribuées de manière à ce que la première portion (41) présente une densité (µ1) d'unités élémentaires plus élevée que la densité (µ2) d'unités élémentaires de la deuxième portion (42).

8. Module lumineux (1) selon la revendication précédente, **caractérisé en ce que** les unités élémentaires (400) sont complètement opaques.

9. Module lumineux (1) selon la revendication 7 ou la revendication 8, **caractérisé en ce que** les unités élémentaires (400) sont en métal.

10. Module lumineux (1) selon l'une des revendications 7 à 9, **caractérisé en ce que** la couche à taux de transmission de lumière variable (4) est obtenue par un procédé de photolithographie.

11. Module lumineux (1) selon l'une des revendications précédentes, **caractérisé en ce que** l'élément à taux de transmission de lumière variable (4) comprend en outre une troisième portion (43) transparente, ladite troisième portion recevant des rayons lumineux destinés à constituer un troisième secteur (S3) du champ éclairage qui est situé le plus éloigné de la source de lumière (2).

12. Module lumineux (1) selon la revendication précédente, **caractérisé en ce que** la deuxième portion (42) est disposée entre la première portion (41) et la troisième portion (43).

13. Module lumineux (1) selon l'une des revendications précédentes, **caractérisé en ce que** l'optique de projection (3) comprend une pluralité de lentilles (30), lesdites lentilles étant empilées les unes sur les autres.

## Patentansprüche

1. Leuchtmodul (1) eines Kraftfahrzeugs, umfassend:
- eine Lichtquelle (2);
- eine Projektionsoptik (3), die dazu ausgelegt ist, ein Beleuchtungsfeld (S) auf den Boden zu projizieren;
- ein Element mit variabler Lichtdurchlässigkeit (4), das zwischen der Lichtquelle und der Projektionsoptik angeordnet ist, wobei das Element mit variabler Lichtdurchlässigkeit umfasst:
• einen ersten Abschnitt (41), der Lichtstrahlen empfängt, die dazu bestimmt sind, einen ersten Sektor (S1) des Beleuchtungsfeldes zu bilden;
• einen zweiten Abschnitt (42), der Lichtstrahlen empfängt, die dazu bestimmt sind, einen zweiten Sektor (S2) des Beleuchtungsfeldes zu bilden, wobei der zweite Sektor weiter von der Lichtquelle entfernt ist als der erste Sektor; und
wobei der erste Abschnitt einen Lichtdurchlässigkeitsgrad, genannt erster Lichtdurchlässigkeitsgrad, aufweist, der niedriger ist als der Lichtdurchlässigkeitsgrad des zweiten Abschnitts, genannt zweiter Lichtdurchlässigkeitsgrad; und
wobei der erste Lichtdurchlässigkeitsgrad und der zweite Lichtdurchlässigkeitsgrad so definiert sind, dass die Lichtintensität des ersten Sektors im Wesentlichen gleich der Lichtintensität des zweiten Sektors ist;
- ein Dia (5), das zwischen der Lichtquelle (2) und der Projektionsoptik (3) platziert ist und ein zu projizierendes Muster trägt,
**dadurch gekennzeichnet, dass** das Element mit variabler Lichtdurchlässigkeit auf dem Dia (5) angeordnet ist.

2. Leuchtmodul (1) nach Anspruch 1, **dadurch gekennzeichnet, dass** das Dia (5) eine erste Fläche (51), die zur Projektionsoptik (3) ausgerichtet ist, und eine zweite Fläche (52), die zur Lichtquelle (2) ausgerichtet ist, aufweist, wobei die erste Fläche in einer Brennebene (F) der Projektionsoptik (3) angeordnet ist und das zu projizierende Muster umfasst, dessen Projektion im Beleuchtungsfeld (S) enthalten ist oder das Beleuchtungsfeld (S) bildet.

3. Leuchtmodul (1) nach Anspruch 2, **dadurch gekennzeichnet, dass** das Element mit variabler Lichtdurchlässigkeit (4) auf der ersten Fläche (51) des Dias (5) angeordnet ist.

4. Leuchtmodul (1) nach Anspruch 2, **dadurch gekennzeichnet, dass** das Element mit variabler Lichtdurchlässigkeit (4) auf der zweiten Fläche (52) des Dias (5) angeordnet ist.

5. Leuchtmodul (1) nach Anspruch 1, **dadurch gekennzeichnet, dass** das Beleuchtungsfeld durch das projizierte Bild der Lichtquelle (2) gebildet wird.

6. Leuchtmodul (1) nach einem der vorhergehenden Ansprüche, **dadurch gekennzeichnet, dass** das Element mit variabler Lichtdurchlässigkeit eine variable Dicke aufweist.

7. Leuchtmodul (1) nach einem der Ansprüche 1 bis 4, **dadurch gekennzeichnet, dass** das Element mit variabler Lichtdurchlässigkeit durch eine Schicht (4) gebildet wird, die eine Vielzahl von Elementareinheiten (400) umfasst, genannt Schicht mit variabler Lichtdurchlässigkeit, wobei die Elementareinheiten (400) so verteilt sind, dass der erste Abschnitt (41) eine höhere Dichte (µ1) von Elementareinheiten aufweist als die Dichte (µ2) von Elementareinheiten des zweiten Abschnitts (42).

8. Leuchtmodul (1) nach dem vorhergehenden Anspruch, **dadurch gekennzeichnet, dass** die Elementareinheiten (400) vollständig undurchsichtig sind.

9. Leuchtmodul (1) nach Anspruch 7 oder Anspruch 8, **dadurch gekennzeichnet, dass** die Elementareinheiten (400) aus Metall bestehen.

10. Leuchtmodul (1) nach einem der Ansprüche 7 bis 9, **dadurch gekennzeichnet, dass** die Schicht mit variabler Lichtdurchlässigkeit (4) durch ein Photolithographieverfahren erhalten wird.

11. Leuchtmodul (1) nach einem der vorhergehenden Ansprüche, **dadurch gekennzeichnet, dass** das Element mit variabler Lichtdurchlässigkeit (4) ferner einen dritten transparenten Abschnitt (43) umfasst, wobei der dritte Abschnitt Lichtstrahlen empfängt, die dazu bestimmt sind, einen dritten Sektor (S3) des Beleuchtungsfeldes zu bilden, der am weitesten von der Lichtquelle (2) entfernt ist.

12. Leuchtmodul (1) nach dem vorhergehenden Anspruch, **dadurch gekennzeichnet, dass** der zweite Abschnitt (42) zwischen dem ersten Abschnitt (41) und dem dritten Abschnitt (43) angeordnet ist.

13. Leuchtmodul (1) nach einem der vorhergehenden Ansprüche, **dadurch gekennzeichnet, dass** die Projektionsoptik (3) eine Vielzahl von Linsen (30) umfasst, wobei die Linsen übereinander gestapelt sind.

## Claims

1. Light module (1) of a motor vehicle comprising:
- a light source (2);
- a projection optic (3) designed to project a lighting field (S) on the ground;
- a variable light transmission element (4) arranged between the light source and the projection optic, said variable light transmission element comprising:
• a first portion (41) receiving light rays intended to form a first sector (S1) of the lighting field;
• a second portion (42) receiving light rays intended to form a second sector (S2) of the lighting field, the second sector being located further from the light source than the first sector; and
the first portion having a light transmission rate, called first light transmission rate, lower than the light transmission rate of the second portion, called second light transmission rate; and
the first light transmission rate and the second light transmission rate being defined so that the light intensity of the first sector is substantially equal to the light intensity of the second sector;
- a slide (5) placed between the light source (2) and the projection optic (3) and bearing a pattern to be projected,
**characterized in that** the variable light transmission element is arranged on the slide (5).

2. Light module (1) according to claim 1, **characterized in that** the slide (5) includes a first face (51) oriented toward the projection optic (3) and a second face (52) oriented toward the light source (2), said first face being placed in a focal plane (F) of the projection optic (3) and comprising the pattern to be projected whose projection is included in the lighting field (S) or forms the lighting field (S).

3. Light module (1) according to claim 2, **characterized in that** the variable light transmission element (4) is arranged on the first face (51) of the slide (5).

4. Light module (1) according to claim 2, **characterized in that** the variable light transmission element (4) is arranged on the second face (52) of the slide (5).

5. Light module (1) according to claim 1, **characterized in that** the lighting field is constituted by the projected image of the light source (2).

6. Light module (1) according to one of the preceding claims, **characterized in that** the variable light transmission element has a variable thickness.

7. Light module (1) according to one of claims 1 to 4, **characterized in that** the variable light transmission element is formed by a layer (4) comprising a plurality of elementary units (400), called variable light transmission layer, said elementary units (400) being distributed so that the first portion (41) has a density (µ1) of elementary units higher than the density (µ2) of elementary units of the second portion (42).

8. Light module (1) according to the preceding claim, **characterized in that** the elementary units (400) are completely opaque.

9. Light module (1) according to claim 7 or claim 8, **characterized in that** the elementary units (400) are made of metal.

10. Light module (1) according to one of claims 7 to 9, **characterized in that** the variable light transmission layer (4) is obtained by a photolithography process.

11. Light module (1) according to one of the preceding claims, **characterized in that** the variable light transmission element (4) further comprises a third transparent portion (43), said third portion receiving light rays intended to form a third sector (S3) of the lighting field which is located furthest from the light source (2).

12. Light module (1) according to the preceding claim, **characterized in that** the second portion (42) is arranged between the first portion (41) and the third portion (43).

13. Light module (1) according to one of the preceding claims, **characterized in that** the projection optic (3) comprises a plurality of lenses (30), said lenses being stacked on top of each other.
